# EUROPEAN PATENT SPECIFICATION

(11) **EP 2 110 192 B1**
(45) Date of publication and mention of the grant of the patent: **06.12.2017**
(21) Application number: 09157838.5
(22) Date of filing: 14.04.2009
(51) Int. Cl.: B23B 27/16

(54) **Tool assembly comprising a clamping device for cutting insert**
Werkzeuganordnung mit Spannvorichtung für Schneidplatte
ENSEMBLE D'OUTIL AVEC DISPOSITIF DE FIXATION POUR UNE PLAQUETTE DE COUPE

(30) Priority: 15.04.2008 IT UD20080080
(43) Date of publication of application: 21.10.2009
(73) Proprietor: Antonelli, Alessandro, 61036 Colli al Metauro (PU) (IT)
(72) Inventor: Antonelli, Alessandro, 61036 Colli al Metauro (PU) (IT)
(74) Representative: Petraz, Gilberto Luigi

(56) References cited:
- DE-A1- 2 130 494
- DE-A1- 2 725 745
- GB-A- 1 295 263
- JP-A- 9 234 608
- LU-A1- 62 273
- US-A- 3 997 951
- US-A- 4 220 428

## Description

### FIELD OF THE INVENTION

The present invention concerns a tool assembly according to the preamble of claim 1 comprising a clamping device for mechanical attachment tools. In particular the tool assembly according to the present invention is used to clamp a mechanical attachment tool of the tool assembly, such as, preferably, but not only, a cutting insert, on a tool-bearing head of the tool assembly used, particularly, but not exclusively, in precision mechanical processing.

Such a tool assembly is known from JP 9 234608 A.

### BACKGROUND OF THE INVENTION

A clamping device is known, to clamp a cutting insert on a tool-bearing head, used in precision mechanical processing, comprising a clamping bracket, able to be associated with the tool-bearing head by means of an attachment screw, disposed above the cutting insert positioned inside a mating seating made on the tool-bearing head. The clamping bracket is shaped so as to define, at one end, a clamping pin which, after the attachment screw has been screwed, exerts pressure on the cutting element and clamps it inside said seating.

One disadvantage of this clamping device is that the force exerted by the bracket is applied only to one end of the cutting element and not centrally, so that this force is not uniformly distributed on the whole surface of the cutting insert. This causes the working top of the cutting insert to be raised with respect to the plane supporting the seating in which the cutting insert is positioned. During the processing step this can cause a poor surface finish, rapid wear, or the breakage of the cutting insert even after only a few workings.

For this reason even the upper bracket is subject to frequent breaks and moreover, during the processing steps, it hinders the discharge of the processing residue, shavings for example, with the consequent problems in terms of maintenance and functionality.

A second known clamping device comprises a lever, disposed inside a compartment made in correspondence with, and below, the plane supporting the seating in which the cutting insert is able to be disposed. The lever is shaped so as to define a substantially L shaped profile, in which the side of the profile which faces toward the top, or the vertical side, and inserted inside a through hole made preferably in the center of the cutting insert, substantially makes an attachment with the cutting insert. The lever cooperates with a screw, able to be screwed into a corresponding seating made on the tool-bearing head, which, after being screwed in, exerts a pressure on the horizontal side of said profile. The force exerted by the screw causes an inclination of the lever so that the vertical side of the lever lifts up, which consolidates the attachment with the cutting insert and pushes the latter close to the walls of the seating in which it is positioned.

In this second clamping device too the non-uniform distribution of forces acting on the cutting insert causes the working top of the cutting insert to be raised with respect to the plane supporting the seating in which it is positioned, thus causing it to break frequently when it is being used, and consequently causing interruptions of the processing in order to replace and calibrate it.

Moreover, the compartment in which the lever is positioned structurally weakens the tool-bearing head, which entails a lesser resistance of the latter to the stresses to which it is normally subjected during processing.

Another known clamping device comprises a combination of the above two clamping devices. If this solution on the one hand allows to partly reduce the known disadvantages, on the other hand it causes an increase in manufacturing costs.

Purpose of the present invention is to achieve a tool assembly comprising a clamping device for mechanical attachment tools which avoids frequent breaks or wear of the tool, drastically reducing any interruptions in working due to the substitution times needed to replace and calibrate it, which does not structurally weaken the tool-bearing head and which entails lower production costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention. In accordance with the above purposes, a tool assembly according to the present invention is used to clamp a mechanical attachment tool on a tool-bearing head comprising a support seating in which the tool is able to be disposed, provided with a through hole disposed substantially in a symmetric position with respect to the center of the tool.

According to a feature of the present invention the tool assembly comprises a first clamping element, able to be inserted in the through hole of the tool and in a mating first cavity, made in the tool-bearing head, aligned with the through hole and substantially orthogonal to the support seating, and a second clamping element, able to be inserted in a mating second cavity, made in the tool-bearing head, communicating with said first cavity.

According to another feature of the present invention, the second clamping element, at the end of travel, exerts a pressure on the first clamping element.

According to another feature of the present invention, said second seating is substantially orthogonal to said first seating.

Advantageously, the second seating is made on one side of the tool-bearing head.

According to a further feature of the present invention, the first clamping element and the second clamping element comprise screw elements.

In this way, the first clamping element, being disposed substantially at the center of the cutting insert, exerts a uniformly distributed force on it which allows the cutting insert to rest in a uniform way on the support seating. Moreover, the pressure exerted, at the end of travel, by the second clamping element on the first clamping element, and from this on the cutting insert, allows the latter to rest uniformly on the walls of the support seating and also prevents the first clamping element, because of the stresses that occur during working, and/or because of expansion due to the heat, from even partially coming out of its mating cavity.

The cooperation between the first and the second clamping element thus confers rigidity on the association between the cutting insert and the tool-bearing head.

Moreover, this type of clamping device, by achieving a uniform clamping between the cutting insert and the tool-bearing head, such that the cutting element does not acquire any undesired inclination, also allows to use a cutting insert of the type normally called negative, that is, having lateral walls orthogonal to its own surface. This type of cutting insert exploits all four of its tops for working , with all the resultant advantages.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partially sectioned view from above of a tool assembly according to the present invention;
- fig. 2 is a lateral sectioned view of the device in fig. 1;
- fig. 3 is a partially sectioned view of a variant of the device according to the present invention; and
- fig. 4 is a lateral sectioned view of the device in fig. 3.

### DETAILED DESCRIPTION OF A PREFERENTIAL FORM OF EMBODIMENT

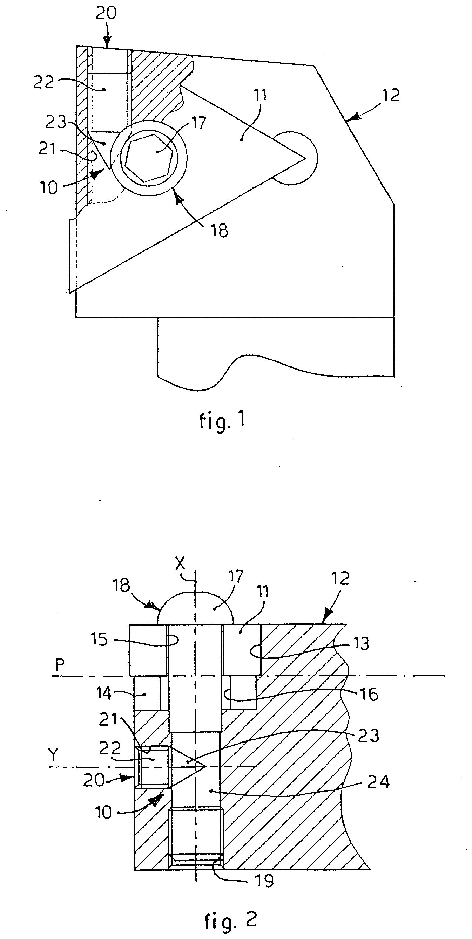

With reference to fig. 1, a clamping device 10 is used to clamp a mechanical attachment tool, such as a cutting insert 11, on a tool-bearing head 12, used particularly, but not exclusively, in precision mechanical processing.

The tool-bearing head 12 comprises, at one of its ends, a support seating 13, able to accommodate the cutting insert 11, having a substantially similar shape to the shape of said cutting insert 11, with which a mating support plate 14 is associated, having a similar shape to the shape of the support seating 13, defining a supporting plane P, on which the cutting insert 11 is able to be disposed.

The cutting insert 11 and the support plate 14 are provided, in their central part, with a first through hole 15 and a second through hole 16 respectively. The first through hole 15 and the second through hole 16 are concentric, and moreover, the second through hole 16 has a diameter substantially larger than the diameter of the first through hole 15.

The clamping device 10 comprises a first screw element 18, the head 17 of which has a larger diameter than the first through hole 15, able to be inserted in the first through hole 15, in the second through hole 16 and in a mating first cavity 19 (fig.2), which is threaded, made in the tool-bearing head 12 and aligned with the holes 15 and 16. The longitudinal axis X of the first screw element 18 is orthogonal to the supporting plane P of the support seating 13.

The clamping device 10 also comprises a second screw element 20, such as for example an headless screw, able to be inserted in a mating second cavity 21, which is threaded, made on one side of the tool-bearing head 12 and communicating with the first cavity 19. The longitudinal axis Y of the second screw element 20 is, in this case, orthogonal to said axis X and parallel to the supporting plane P.

The second screw element 20 is provided with a shank 22 shaped so as to define a conical end 23.

The lateral surface of the conical end 23 of the second screw element 20 is able to exert pressure on the shank 24 of the first screw 18, when the second screw element 20 is at the end of travel.

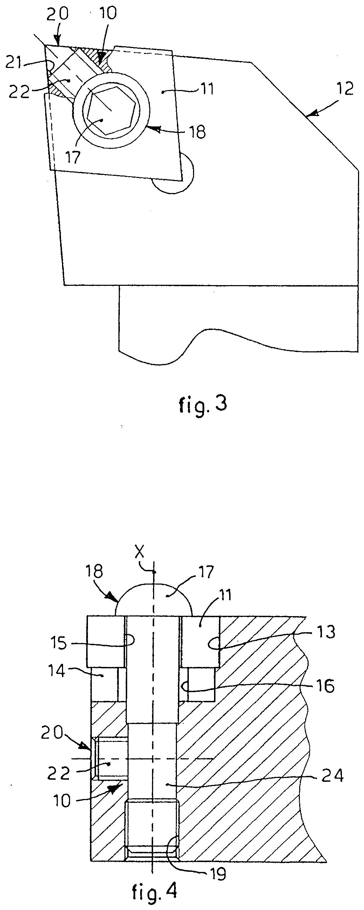

According to a further form of embodiment of the present invention, shown in fig. 3, the second cavity 21 is made in correspondence and below the working top of the cutting insert, not represented in the drawing. In this form of embodiment the shank 22 of the second screw element 20 is shaped so as to define a substantially cylindrical profile, the base of which is able to cooperate with the shank 24 of the first screw element 18.

The tool assembly according to the present invention as described heretofore functions as follows.

The first screw element 18, which is able to be inserted substantially at the center of the cutting insert 11 through the through hole 15, after it has been inserted and clamped inside the first cavity 19, exerts a uniformly distributed force on the surface of the cutting insert 11, which allows the latter to rest in a uniform way, that is, without raising its working top, on the supporting plane 14.

The pressure exerted by the second screw element 20, at the end of travel, on the shank 24 of the first screw element 18, also determines a thrust component, substantially orthogonal with respect to the longitudinal axis X of the first screw element 18, which acts on the first screw element 18, and consequently on the cutting insert 11. This thrust component pushes the cutting insert 11 close to the walls of the support seating 13, allowing the latter to rest uniformly on them.

It is clear that modifications and/or additions of parts may be made to the clamping device for clamping a mechanical attachment tool as described heretofore, without departing from the scope of the present invention.

It is also clear that, although the present invention has been described with reference to some specific examples, a person of skill in the art shall certainly be able to achieve many other equivalent forms of a tool assembly for clamping a mechanical attachment tool, having the characteristics as set forth in the claims and hence all coming within the field of protection defined thereby.

## Claims

1. Tool assembly, comprising a clamping device to clamp a mechanical attachment tool (11) of the tool assembly a tool-bearing head (12) of the tool assembly, said tool-bearing head (12) comprising a support seating (13) in which said mechanical attachment tool (11) is able to be disposed,
wherein the mechanical attachment tool (11) is provided with a first through hole (15) disposed substantially in a symmetric position with respect to the center of said mechanical attachment tool (11),
the tool assembly further comprising a first screw element (18) comprising at a terminal end thereof a threaded portion, said first screw element (18) being able to be inserted in said through hole (15) and directly clamped to said tool-bearing head (12) by screwing its threaded portion in a mating threaded first cavity (19) made in said tool-bearing head (12), aligned with said through hole (15) and substantially orthogonal to said support seating (13), and a second screw element (20), able to be inserted in a mating second cavity (21), made in said tool-bearing head (12), communicating with said first cavity (19), wherein said second screw element (20), at the end of its travel, is configured to exert a pressure on said first screw element (18) threaded in the threaded first cavity (19), laterally pushing the mechanical attachment tool (11) towards to the walls of the support seating (13), allowing said mechanical attachment tool (11) to rest uniformly on said walls,
**characterized in that** the tool assembly further comprises a mating support plate (14) associated with said support seating (13), having a similar shape to the shape of the support seating (13), defining a supporting plane (P), on which the mechanical attachment tool (11) is able to be disposed, the support plate (14) being provided, in its central part, with a second through hole (16) concentric with said first through hole (15) and through which the first screw element (18) is able to be inserted, the second through hole (16) having a diameter substantially larger than the diameter of the first through hole (15) so as to define a clearance between the first screw element (18) and the second through hole (16) of the support plate (14) that permits the lateral movement of the mechanical attachment tool (11) towards the walls of the support seating (13) without raising the working top of the first screw element (18) on said supporting plate (14).

2. Tool assembly as in claim 1, **characterized in that** the first screw element (18) is configured to exert a uniformly distributed force on the surface of the mechanical attachment tool (11), which allows the latter to rest in a uniform way on the supporting plane (14).

3. Tool assembly as in claim 1, or 2, **characterized in that** said pressure causes a thrust component on said first screw element (18) substantially orthogonal with respect to the longitudinal axis (X) of said first screw element (18).

4. Tool assembly as in claim 1, or 2, **characterized in that** said second cavity (21) is substantially orthogonal to said first cavity (19).

5. Tool assembly as in claim 1, or 2, **characterized in that** said second cavity (21) is made on one side of said tool-bearing head (12).

6. Tool assembly as in any claim hereinbefore, **characterized in that** said second screw element (20) is shaped so as to define a conical end (23).

7. Tool assembly as in any claim from 1 to 5, **characterized in that** said second screw element (20) is shaped so as to define a substantially cylindrical profile.

## Patentansprüche

1. Werkzeuganordnung, umfassend eine Spannvorrichtung zum Einspannen eines mechanischen Befestigungswerkzeugs (11) der Werkzeuganordnung an einem Werkzeughalterungskopf (12) der Werkzeuganordnung, wobei der Werkzeughalterungskopf (12) einen Aufnahmesitz (13) umfasst, in dem das mechanische Befestigungswerkzeug (11) angeordnet werden kann, wobei das mechanische Befestigungswerkzeug (11) mit einer ersten Durchgangsbohrung (15) versehen ist, die in einer im Wesentlichen symmetrischen Position in Bezug auf das Zentrum des mechanischen Befestigungswerkzeugs (11) angeordnet ist, wobei die Werkzeuganordnung ferner ein erstes Schraubenelement (18) umfasst, welches an seinem einen Ende einen mit einem Gewinde versehenen Abschnitt aufweist, wobei das erste Schraubenelement (18) in die Durchgangsbohrung (15) eingeführt und in den Werkzeughalterungskopf (12) direkt eingespannt werden kann, indem sein mit einem Gewinde versehener Abschnitt in einen mit einem Gegengewinde versehenen ersten Hohlraum (19) eingeschraubt wird, der in dem Werkzeughalterungskopf (12) ausgebildet und mit der Durchgangsbohrung (15) und im Wesentlichen orthogonal zu dem Aufnahmesitz (13) ausgerichtet ist, und ein zweites Schraubenelement (20) umfasst, welches in einen passenden zweiten Hohlraum (21) eingeführt werden kann, der in dem Werkzeughalterungskopf (12) ausgebildet ist und mit dem ersten Hohlraum (19) in Verbindung steht, wobei das zweite Schraubenelement (20) am Ende seines Laufwegs so konfiguriert ist, dass es einen Druck auf das erste Schraubenelement (18) ausübt, welches in den mit einem Gewinde versehenen ersten Hohlraum (19) eingeschraubt ist, wodurch das mechanische Befestigungswerkzeug (11) seitlich an die Wände des Aufnahmesitzes (13) gedrückt wird und das mechanische Befestigungswerkzeug (11) gleichmäßig auf den Wänden aufliegt,
**dadurch gekennzeichnet, dass** die Werkzeuganordnung ferner eine passende Auflageplatte (14) umfasst, die mit dem Aufnahmesitz (13) verbunden ist und eine ähnliche Form wie der Aufnahmesitz (13) aufweist, wodurch eine Auflageebene (P) definiert wird, auf der das mechanische Befestigungswerkzeug (11) angeordnet werden kann, wobei die Auflageplatte (14) in ihrem zentralen Bereich mit einer zweiten Durchgangsbohrung (16) versehen ist, die konzentrisch mit der ersten Durchgangsbohrung (15) ist und durch die das erste Schraubenelement (18) eingeführt werden kann, wobei die zweite Durchgangsbohrung (16) einen Durchmesser aufweist, der im Wesentlichen größer als der Durchmesser der ersten Durchgangsbohrung (15) ist, so dass eine Lücke zwischen dem ersten Schraubenelement (18) und der zweiten Durchgangsbohrung (16) der Auflageplatte (14) definiert wird, welche das seitliche Verschieben des mechanischen Befestigungswerkzeugs (11) in Richtung der Wände des Aufnahmesitzes (13) ermöglicht, ohne dass die Arbeitsfläche des ersten Schraubenelements (18) auf der Auflageplatte (14) angehoben wird.

2. Werkzeuganordnung gemäß Anspruch 1, **dadurch gekennzeichnet, dass** das erste Schraubenelement (18) so konfiguriert ist, dass es eine gleichmäßig verteilte Kraft auf die Oberfläche des mechanischen Befestigungswerkzeugs (11) ausübt, wodurch das letztere gleichmäßig auf der Auflageebene (14) aufliegen kann.

3. Werkzeuganordnung gemäß Anspruch 1 oder 2, **dadurch gekennzeichnet, dass** der Druck eine Schubkraftkomponente auf das erste Schraubenelement (18) bewirkt, die im Wesentlichen orthogonal in Bezug auf die Längsachse (X) des ersten Schraubenelements (18) ist.

4. Werkzeuganordnung gemäß Anspruch 1 oder 2, **dadurch gekennzeichnet, dass** der zweite Hohlraum (21) im Wesentlichen orthogonal zu dem ersten Hohlraum (19) ist.

5. Werkzeuganordnung gemäß Anspruch 1 oder 2, **dadurch gekennzeichnet, dass** der zweite Hohlraum (21) auf einer Seite des Werkzeughalterungskopfs (12) ausgebildet ist.

6. Werkzeuganordnung gemäß irgendeinem der vorhergehenden Ansprüche, **dadurch gekennzeichnet, dass** das zweite Schraubenelement (20) so geformt ist, dass ein konisches Ende (23) definiert wird.

7. Werkzeuganordnung gemäß irgendeinem der Ansprüche 1 bis 5, **dadurch gekennzeichnet, dass** das zweite Schraubenelement (20) so geformt ist, dass ein im Wesentlichen zylindrisches Profil definiert wird.

## Revendications

1. Ensemble d'outil comprenant un dispositif de serrage pour serrer un outil de fixation mécanique (11) de l'ensemble d'outil sur une tête porteuse d'outil (12) de l'ensemble d'outil, ladite tête porteuse d'outil (12) comprenant un logement (13) dans lequel ledit outil de fixation mécanique (11) est apte à être disposé,
dans lequel l'outil de fixation mécanique (11) est pourvu d'un premier trou traversant (15) disposé sensiblement en position symétrique par rapport au centre dudit outil de fixation mécanique (11), l'ensemble d'outil comprenant en outre un premier élément fileté (18) comprenant à l'une de ses extrémité terminales une partie filetée, ledit premier élément fileté (18) étant apte à être inséré dans un trou traversant (15) et directement serré sur ladite tête porteuse d'outil (12) par vissage de sa partie filetée dans une première cavité filetée en correspondance (19) ménagée dans ladite tête porteuse d'outil (12), alignée avec ledit trou traversant (15) et sensiblement orthogonale audit logement (13), et un second élément fileté (20), apte à être inséré dans une seconde cavité correspondante (21) réalisée dans ladite tête porteuse d'outil (12), communiquant avec ladite première cavité (19), ledit second élément fileté (20) étant, à la fin de son déplacement, configuré pour exercer une pression sur ledit premier élément fileté (18) vissé dans la première cavité filetée (19), poussant latéralement l'outil de fixation mécanique (11) vers les parois du logement (13), permettant audit outil de fixation mécanique (11) de s'appuyer uniformément sur lesdites parois,
**caractérisé en ce que** l'ensemble d'outil comprend en outre une plaque de support correspondante (14) associée avec ledit logement (13), ayant une forme similaire à la forme du logement (13), formant un plan de support (P), sur lequel l'outil de fixation mécanique (11) est apte à être disposé, la plaque de support (14) étant pourvue, dans sa partie centrale, d'un second trou traversant (16) concentrique avec ledit premier trou traversant (15) et à travers lequel le premier élément fileté (18) est apte à être inséré, le second trou traversant (16) ayant un diamètre sensiblement supérieur au diamètre du premier trou traversant (15) de manière à former un espace entre le premier élément fileté (18) et le second trou traversant (16) de la plaque de support (14) qui permet le mouvement latéral de l'outil de fixation mécanique (11) vers la paroi du logement (13) sans soulever l'extrémité de travail du premier élément fileté (18) de ladite plaque de support (14).

2. Ensemble d'outil selon la revendication 1, **caractérisé en ce que** le premier élément fileté (18) est configuré pour exercer une force répartie uniformément sur la surface de l'outil de fixation mécanique (11), ce qui permet à ce dernier de reposer de manière uniforme sur le plan de support (14).

3. Ensemble d'outil selon la revendication 1 ou 2, **caractérisé en ce que** ladite pression crée une composante de poussée sur ledit premier élément fileté (18) sensiblement orthogonale à l'axe longitudinal (X) dudit premier élément fileté (18).

4. Ensemble d'outil selon la revendication 1 ou 2, **caractérisé en ce que** ladite seconde cavité (21) est sensiblement orthogonale à ladite première cavité (19).

5. Ensemble d'outil selon la revendication 1 ou 2, **caractérisé en ce que** ladite seconde cavité (21) est ménagés sur un côté de ladite tête porteuse d'outil (12).

6. Ensemble d'outil selon l'une quelconque des revendications précédentes, **caractérisé en ce que** ledit second élément fileté (20) est conformé de sorte à présenter une extrémité conique (23).

7. Ensemble d'outil selon l'une des revendications 1 à 5, **caractérisé en ce que** ledit second élément fileté (20) est conformé de sorte à présenter un profil sensiblement cylindrique.
